# EUROPEAN PATENT SPECIFICATION

(11) **EP 1 304 988 B1**
(45) Date of publication and mention of the grant of the patent: **15.12.2004**
(21) Application number: 01961124.3
(22) Date of filing: 30.07.2001
(51) Int. Cl.: A61G 17/00

(54) **FUNERARY CONTAINER MADE OF PAPER MATERIAL, AND ASSEMBLY DEVICE EMPLOYED THEREIN**
SARG AUS PAPIERMATERIAL, UND MONTAGEVORRICHTUNG DAFÜR
CERCUEIL DE PAPIER ET DISPOSITIF D'ASSEMBLAGE ASSOCIE

(30) Priority: 04.08.2000 IT MI001823
(43) Date of publication of application: 02.05.2003
(73) Proprietor: Foroni, Ida, 21100 Varese (IT)
(72) Inventor: Foroni, Ida, 21100 Varese (IT)
(74) Representative: Tansini, Elio Fabrizio
(86) International application number: PCT/IT2001/000416
(87) International publication number: WO 2002/011660

(56) References cited:
- WO-A-91/04421
- WO-A-95/08973
- AT-B- 399 705
- FR-A- 1 569 802
- US-A- 3 220 080

## Description

The present invention relates to a funerary container made of paper material, as well as an assembly device employed therein.

As is well known, in different situations or for disparate incidental and/or ethical reasons it is preferable to employ containers for human corpses made of light material, instead of employing traditional but heavy containers made of wood or metal.

In general, in such cases coffins are readied whose walls are constituted essentially by paper material; such paper material is, in nearly all cases, constituted by one or more layers of cardboard superposed and so arranged as to define a containment body of substantially prismatic shape. It should be noted that such containers can often be assembled at the time they are needed, since the different sides constituting the containment body are generally obtained starting from a single sheet of cardboard, die cut according to a polygon corresponding to the two-dimensional development of the faces of the prismatic body itself.

By acting appropriately on folding lines (positioned in correspondence with the corners of the prismatic body), one easily obtains the complete shape of the funerary container; naturally, once the different sides of the container are adequately oriented, its shape needs to be locked, by appropriately securing the sides.

The operations for mutually securing the cardboard sides can be carried out by employing appropriate devices, which act by mutually securing at least two cardboard walls.

Generally, adhesive surfaces can be employed, or use can be made of fastening elements of more or less complex nature, depending on the area in which they are installed (for instance, they can be simple screw and nut couplings or reinforcing ribs that locally circumscribe a vertex of the container). Document WO-A-9 104 421 shows a fastening element comprising all the features set out in the preamble of claim 1. In addition, the presence can also be provided of coupling tabs able to be extracted from the cardboard panels and destined to be coupled in corresponding seats on another panel.

It is also common, in the field of funerary containers made of paper material, to use stiffening frames (typically made of wood), which are positioned in such a way as to be integral with the actual container and to withstand the loads deriving from the weight of a corpse without causing the deformation or even the breakage of the cardboard.

The prior art summarily described above, however, has some limitations.

First of all, known assembly system have, in each of the described variations, some drawbacks relating to their operative flexibility and practicality of use.

Generalising the above observations, note that known assembly systems require a rather long period of time to be readied, or make it necessary to employ tools (which are not always easy to use or find, considering possible scenarios of employment of such funerary containers); in addition, it must also be noted that oftentimes "tab" couplings do not offer sufficient guarantees of structural strength, with evident disadvantages in terms of the reliability of the container itself.

One drawback associated to what is discussed above is given by the fact that the peculiar difficulties of employment of known assembly systems often entail the need to have specialised operators available, which once again detracts from operative flexibility and ease of use.

Moreover, it should be noted that the presence of stiffening frames greatly decreases the practicality of funerary containers made of paper material, since the frames themselves are difficult to fold or stow in small spaces; alternatively, they need to be dismantled and separated from the cardboard elements, and hence have to be mounted back onto them when the container is to be used; this leads to additional problems of impracticality of use and often requires the presence of specialised operators and/or dedicated tools for the assembly operation.

Yet a further drawback linked to known funerary containers resides in the fact that the presence of the stiffening frame entails a non negligible increase in production costs; the frame, usually made of wooden material or also of plastic material, causes considerable environmental impact problems, especially in those cases in which it is made of non biodegradable material and if the funerary container needs to be subjected to cremation or buried for a long period of time.

In this situation the technical task constituting the basis for the present invention is to devise a funerary container made of paper material that is able substantially to overcome the aforementioned limitations. Within the scope of said technical task, an important aim of the invention is to devise a funerary container whose production and assembly are significantly simple and rapid.

An additional aim at the base of the present invention consists of devising a funerary container that is free from the need to have a stiffening frame, even when it has to contain particularly heavy and/or large bodies.

Obviously, the present invention aims to achieve the optimal coexistence, in a funerary container made of paper material, of high performance in terms of admissible load and of easy disassembly and reduced storage space and reduced environmental impact, especially in the cases in which the container (and consequently its content) are destroyed by cremation.

Yet another aim of the present invention is to provide an assembly device, particularly suitable to be installed on funerary containers made of plastic material, allowing their storage in disassembled form while also allowing a rapid assembly.

An additional aim of the present invention is to provide an assembly device, in particular employed in funerary containers made of paper material, which offers a particularly stable coupling and is easy to deploy, even by non specialised operators. Lastly, another aim of the present invention is to devise a funerary container made of paper material provided with said device (as well as an assembly device employed in such a funerary container) that has reduced production costs.

### Disclosure of the Invention

The technical task set out above and the specified aims are substantially achieved by a funerary container made of plastic material provided with said device, as well as by the assembly device employed in said funerary container, having the characteristics set out in one or more of the accompanying claims.

### Description of the Drawings

The description is now provided, purely by way of non limiting example, of a preferred, but not exclusive, embodiment of a funerary container made of paper material and of an assembly device employed in said funerary container according to the invention, illustrated in the accompanying drawings, in which:
- Figure 1 shows a partial section view of the assembly device according to the present invention;
- Figure 2 shows a perspective view of the funerary container according to the present invention;
   - - Figure 3 shows a lateral view of the assembly device of Figure 1;

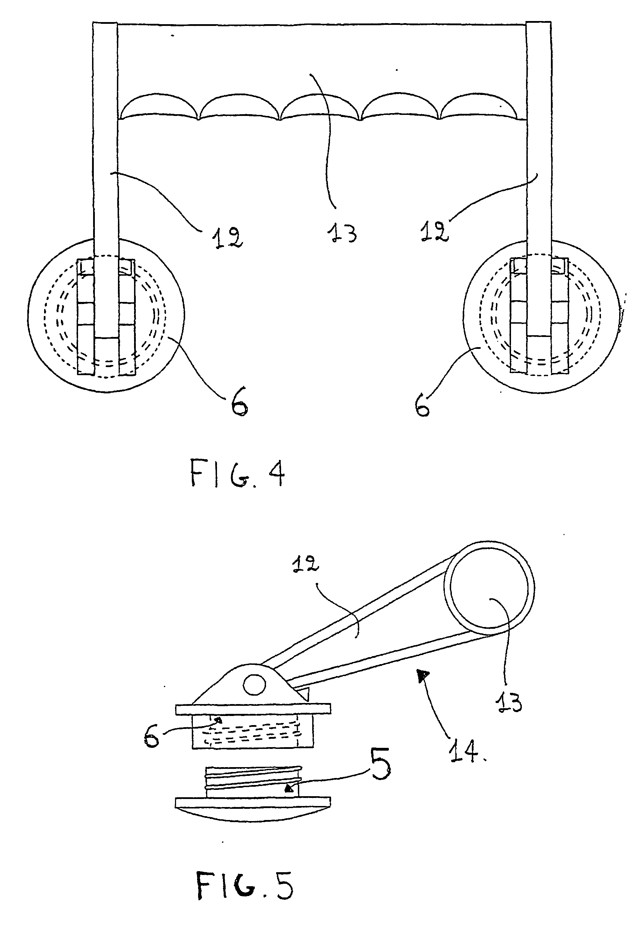

   - - Figure 4 shows a front view of an embodiment variation of the assembly device of Figure 1;
   - - Figure 5 shows a front view of the embodiment variation of the assembly device of Figure 4;
   - - Figure 6 shows a lateral view of an embodiment variation of the container according to the present invention; and
   - - Figure 7 shows a front view of the embodiment variation of the container of Figure 6.

### Description of the Illustrative Embodiments

With reference to the aforesaid figures, the funerary container according to the invention is globally indicated with number 1.

It substantially comprises a predetermined number of laminar elements 2, which are flexibly connected to each other. Said laminar elements are made of cardboard with corrugated core (which can advantageously be obtained by recycling waste paper) and, in particular, according to loading requirements, can be constituted by multiple cardboard layers superposed on each other (in an arrangement that is practically similar to that of plywood).

The laminar elements 2 are mutually connected in such a way as to define, in mutual co-operation, a housing box body 3, which shall obviously serve the purpose of containing a body (or, rather, a human or animal corpse). Advantageously, said housing box body 3 has a bottom wall, a plurality of lateral walls and at least a closure portion (which in practice serves as a lid).

The laminar elements are obtained, in accordance with the prior art, by appropriately die cutting a blank made of more or less layered cardboard; advantageously, the profile of such die cutting shall substantially correspond to the development of the surface that delimits the housing box body 3.

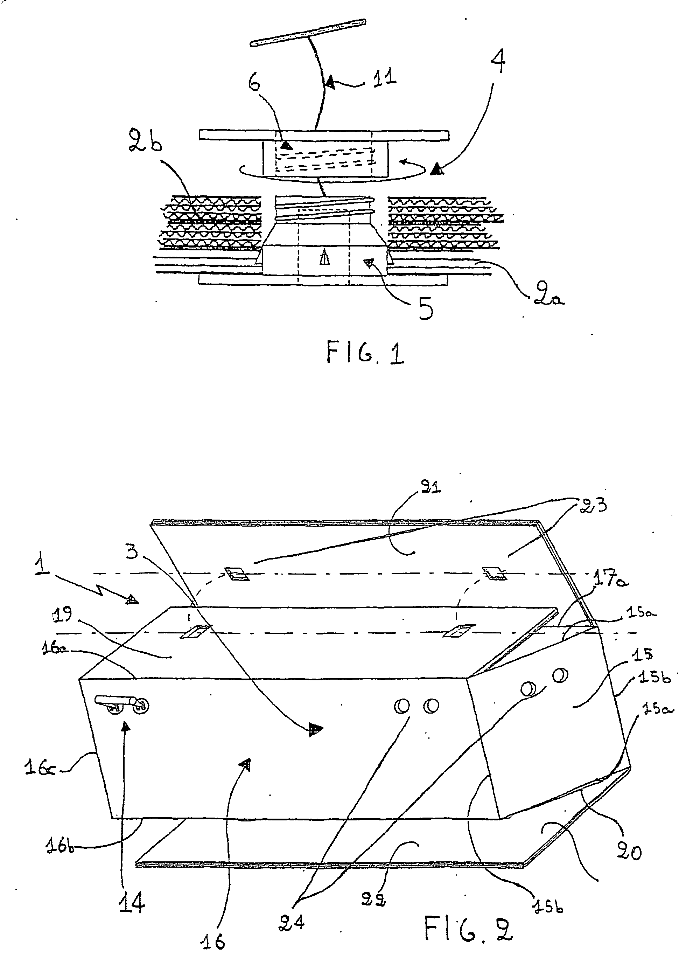

Delving deeper in the details, Figure 2 shows that said laminar elements 2 comprise first of all a first head face 15, which has two primary folding sides 15a and two shared sides 15b positioned transversely relative to the primary folding sides 15a (in other words the first head face 15 is substantially a rectangle or a square, whose pairs of opposite sides respectively comprise the two primary folding sides 15a and the two shared sides 15b). Next to the first head face 15, there are a first and a second lateral faces 16, 17, respectively connected to the first head face 15 on each of the shared sides 15b; the first and the second lateral face exhibit respectively an upper long side 16a, 17a, a lower long side 16b, 17b, and a short side 16c, 17c opposite to one of the shared sides 15b.

In accordance with the present invention, a second head face 18 (substantially identical to the first head face 15) is present and connected to the first lateral face 16 or to the second lateral face 17 through one of the respective short sides 16c or 17c. Obviously, the second head face 18 also has two secondary folding sides (18a) positioned transversely relative to the short sides 16c or 17c (as the case may be).

The two head faces 15 and 8 and the two lateral faces 16 and 17 define the lateral walls of the housing box body 3.

Advantageously, a first upper closure face 19 is also present, connected to the first lateral face 16 through the upper long side 16a; in parallel, the presence is provided of a first lower closure face 20, connected to the first lateral face 16 through the lower long side 16b.

Conveniently, a second upper closure face 21 is lastly present, connected to the second lateral face 17 through the upper long side 17a; said second upper closure face 21 is flanked by a second lower closure face 22, which is connected to the second lateral face 17 through the lower long side 17b.

The four lower and upper closure faces define respectively the bottom and the closure portion of the housing box body 3.

An embodiment variation of the container 1 according to the present invention conveniently provides for the presence of some additional laminar elements 2; said laminar elements 2 find particular application when a container 1 characterised by a high rigidity of its vertices is to be obtained.

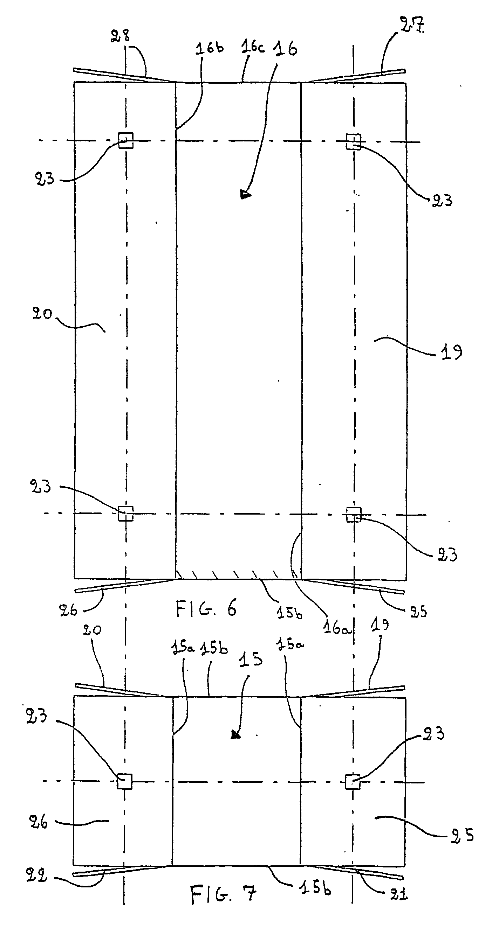

In accordance with said embodiment variation, one can observe, in Figure 6, the presence of a first upper stiffening face 25 and of a first lower stiffening face 26, which are connected to the first head face (15) respectively through one of the primary folding sides (15a). In parallel, there are also a second upper stiffening face 27 and a second lower stiffening face 28; said faces are connected to the second head face 18 respectively through one of the secondary folding sides (18a).
Advantageously, the funerary container 1 according to the present invention further comprises a predetermined number of assembly devices 4; each of said assembly devices 4 is operatively active on at least two laminar elements 2 to keep them in a mutually approached position in operative conditions (in other words, the assembly device serve to maintain the shape of the housing box body 3 once the various laminar elements have been appropriately folded and mutually approached in such a way as to define it). It should be noted that the assembly devices 4 according to the present invention are designed in such a way as to assure a stable coupling between two due laminar elements (which, for the sake of descriptive consistency, we shall hereinafter define as a first laminar element 2a and a second laminar element 2b) constituting the container 1; in any case, should the needs of the case so require, it is possible for a single assembly device 4 to interconnect more than a pair of laminar elements 2 (for instance, if it should become necessary to add an additional cardboard panel to increase the ability to withstand the weight of the body to be transported or if the stiffening faces 25, 26, 27 and 28 are present; in this case, each assembly device will engage three laminar elements, i.e. two lower or upper closure faces and a stiffening face).

In accordance with the present invention, at least one (more in particular, all) of the assembly devices 4 comprises (comprise) essentially a main fastening element 5, which is irremovably connected to a first laminar element 2a and destined to receive in coupling fashion at least a second laminar element 2b.

In order further to improve the stability of the connection between the two laminar elements, the assembly device 4 further comprises a complementary fastening element 6; said complementary fastening element 6 is operatively active on the second laminar element 2b in operative conditions, and it is destined to be engaged at least partially on the main fastening element 5.

Advantageously, both the main fastening element 5 and the complementary fastening element 6 can easily be obtained from plastic material (for instance by moulding); it is also possible, in accordance with the present invention, to select a biodegradable plastic material, in order substantially to solve environmental impact problems deriving from a long term burial (or a cremation) of the subject container 1.

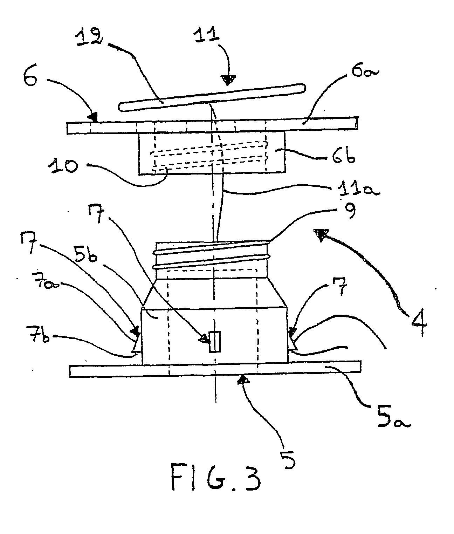

Delving deeper into details (see also Figures 1 and 3), one can observe that the main fastening element 5 comprises a main abutment portion 5a (for instance shaped in the manner of an annulus), which is destined to be engaged adjacently to a first side of the first laminar element 2a (which generally is an interior side of the housing box body 3). Also present is a main active portion 5b, which extends towards a second side of the first laminar element 2a opposite the first side (typically, the exterior side).

Conveniently, the main active portion 5b is substantially shaped according to a prismatic body having its axis of development substantially transverse (in practice, perpendicular) to the plane of lay of the first laminar element 2a.

Analysing the figures, one also notes that said prismatic body comprises a locking body 7, obtained laterally on the prismatic body and destined to be irremovably engaged with the first laminar element 2a in operative conditions; in other words, the locking body 7 directly realises the condition of irremovable coupling between the main fastening element 5 and the first laminar element 2a.

In practice, the realisation of an irremovable coupling is guaranteed by the particular conformation of the locking body 7 itself, since it is substantially shaped as a retaining tooth.

In particular, the locking body 7 has an insertion surface 7a (oriented according to a predetermined insertion angle 8 relative to the longitudinal axis of development of the prismatic body) and an abutment surface 7b connected to the insertion surface 7a (which instead is oriented along a direction perpendicular to the longitudinal axis of development of the prismatic body).

During the assembly of the container 1, the operator forces the cylindrical body through appropriate openings (which in practice are the housing seats 23 described farther on) obtained in the first laminar element 2a; the locking body 7 is thereby progressively inserted inside the cardboard, in such a way as to make its accidental release nearly impossible.

Advantageously, to obtain the utmost behavioural symmetry, the main active portion 5b comprises a predetermined number of locking bodies 7 spaced at equal radial intervals on the prismatic body and positioned at a predetermined distance from the abutment portion 5a (in Figure 3, for instance, one notes four locking bodies 7 set 90° from each other and all positioned at the same height relative to the abutment portion 5a).

Advantageously, the main active portion 5b further comprises mechanical fastening means, which are obtained on the and are destined to be engaged with the fastening element 6 in operative conditions. In particular, said mechanical fastening means comprise a thread 9, which extends laterally from the prismatic body and operates in ways that shall be explained in greater detail farther on.

In accordance with the present invention, the complementary fastening element 6 comprises (similarly to the main fastening element 5) a complementary abutment portion 6a, destined to be engaged adjacently to a first surface of the second laminar element 2b, and a complementary active portion 6b extending towards a second surface of the second laminar element 2b (typically, towards the interior of the housing box body 3). At this point it should be specified that, in operative conditions (i.e. when the container 1 is completely mounted), the aforesaid second surface of the second laminar element 2b is practically opposite to the first surface of the second laminar element 2b; obviously, the second surface of the second laminar element 2b and the second side of the first laminar element 2a being in mutual contact in operative conditions.

The complementary active portion 6b conveniently comprises interconnection means destined to engage the mechanical fastening means of the main active portion 5b; in particular, said interconnection means comprise a hollow prismatic body extending from the complementary abutment portion 6a and having in its interior a helical groove 10 substantially counter-shaped relative to the thread 9.

When performing the operations for mounting the container 1, the operator, after inserting the main fastening element 5 in irremovable fashion in the first laminar element 2a and after approaching the first laminar element 2a itself to the second laminar element 2b, mutually engages the main fastening element 5 to the complementary fastening element 6, typically by meshing the thread 9 with the helical groove 10.

To facilitate the approach of the first laminar element 2a and of the second laminar element 2b, guide means 11 are advantageously present, which are connected to the main fastening element 5.

Said guide means 11 are operatively active on the main fastening element 5 to determine, or in other words to facilitate, the approach of the first laminar element 2a to the second laminar element 2b.

The guide means 11 substantially comprise a traction body 11a connected to the main active portion 5b; said traction element 11a is conveniently actuated by an operator (when mounting the container 1) to approach the first laminar element 2a to the second laminar element 2b; in other words, the operator, after inserting the main the fastening element 5 pulls it towards the exterior by means of the traction body 11a, to approach all components constituting the container to be assembled.

In a preferred embodiment, the traction body 11a is simply a thread-like element, having a first end connected to the main abutment portion 5a and a second end (opposite to the first end) provided with an actuation interface 12 (typically, a body of any shape provided it is suitable for being gripped and handled by an operator in operative conditions).

An advantageous embodiment variation relating to the traction body 11a provides for said traction body to be a rigid element 12; said rigid element 12 has a first end hinged to the complementary abutment portion 6a (for instance according to a hinge axis that is substantially parallel to the plane of lay of the second laminar element 2b) and a second end opposite to the first end. On the second end of the rigid element 12 is present a contoured grip 13 (which can properly be defined a handle) destined to be gripped by a hand of the user.

The presence of such a rigid element 12 finds useful application if the container 1 is to be provided with a series of transport handles; in this case, the container 1 itself comprises a predetermined number of coupled assembly devices 14 (mounted on the laminar elements defining the lateral walls of the housing box body 3), each of which has at least two main fastening elements 5 (connected to a first laminar element 2a, mutually distanced by a predetermined interval and advantageously destined to receiving in coupling fashion at least a second laminar element 2, preferably one for each of the two elements 5).

Advantageously, to said pair of main fastening elements 5 are associated (when the container 1 is assembled) two complementary fastening elements 6, each of which respectively engages the main fastening elements 5 and equally provided with two rigid elements 12, which in turn have their ends hinged respectively to complementary tightening elements 6 and their second ends mutually connected by a grip 13.

In this case, the grip 13 extends between the rigid elements 12 for a length substantially corresponding to the aforesaid spacing, in such a way as to define a large handle which is so positioned as to allow an operator easily to lift the container 1 whilst standing to its side.

Conveniently, the container according to the present invention further comprises a predetermined number of housing seats 23 (obviously obtained in the manner best suited to the requirements of the moment on the different laminar elements 2), each of which is destined to receive an assembly device 4.

As the accompanying figures show, the housing seats 23 are obtained at least on the first lower closure face 20 and on the second lower closure face 22 (in such a way as to define the bottom of the housing box body 3); obviously, said housing seats 23 are in substantially corresponding positions in operative conditions. In order to close the container conveniently after placing therein the body to be transported or buried, the housing seats 23 are also obtained on the first upper closure face 19 and on the second upper closure face 21 (also in substantially corresponding positions in operative conditions); in this way the assembly of the container is complete, i.e. it is possible to define also the closure portion of the container 1 itself.

In the particular embodiment variation of the container 1 that provides for the presence of the stiffening faces 25, 26, 27 and 28, naturally the housing seats 23 are also obtained on the first lower stiffening face 26, on the second lower stiffening face 28, on the first upper stiffening face 25 and on the second lower stiffening face 28.

Conveniently, said housing seats 23 shall be placed in substantially corresponding positions in operative conditions.

Naturally, to facilitate the mounting of the container 1 to the maximum possible extent, the latter housing seats shall be placed in positions corresponding to the housing seats 23 obtained respectively on the first lower closure face 20 and/or on the second lower closure face 22 and/or on the first upper closure face 19 and/or on the second upper closure face 21; in this way the assembly devices interconnect as many as three laminar elements, once they are duly installed in the housing seats 23 (which will simultaneously be superposed).

Lastly, it should be noted that the container according to the present invention further comprises a predetermined number of securing seats 24 (obtained in the first head face 15 and/or in the first lateral face 16 and/or in the second lateral face 17 and/or in the second head face 18, depending on requirements of maximum transportable weight or ease of transport of the loaded container); said securing seats, which are essentially constituted by a pair of through holes, serve essentially to house the coupled assembly devices 14.

The invention achieves important advantages.

First of all, it should be noted that the disposition of the two main elements constituting the assembly device allows an effective connection between two or more laminar elements (which concur to define a pair of walls of the funerary container itself); in particular, it should be remarked that the assembly device according to the present invention allows to avoid harmful areas where stresses accumulate, preventing the occurrence of crushing or lacerations in the cardboard and consequently maintaining unaltered the shape and integrity of the container.

Another typical advantage of such an assembly device consists of the fact that its main components can be effectively inserted in the laminar cardboard elements in a secure manner and with a minimum series of adaptation operations, to the advantage of the reduction in production times and costs (as well as ease of construction).

Lastly, the subject device allows considerably to simplify the assembly of the container at the time it is needed, since it allows the operator to approach, effectively and precisely, the laminar cardboard elements and subsequently to obtain a mechanical coupling with few, very simple operations.

It should also be stressed that the present assembly device exhibits very reduced exterior dimensions and is suitable for being placed in any position on the outer surface of the container 1; this entails advantages also in terms of stowage ease, since it is possible to keep the assembly devices and the cardboard elements separate until the time of need, then installing the assembly devices simply by means of inserting them in snap-on fashion on the cardboard elements.

Another advantage of the present invention is provided by the extreme simplicity of shape of the container, which additionally allows for a very high load bearing capacity without making use of a stiffening frame; in connection thereto, one should lastly note the characteristic of the funerary container according to the present invention whereby it exhibits an extremely low environmental impact; this is essentially due to the large percentage of recycled material that can be employed, coupled also to the absence of poorly biodegradable materials or of materials able to produce harmful waste if subjected to cremation.

Lastly, it should be stressed that the funerary container made of paper material and the assembly device reduce production costs and considerably simplify fabrication processes.

## Claims

1. Assembly device, in particular for funerary containers made of paper material, comprising:
- a main fastening element (5) irremovably connectable to a first laminar element (2a), said first laminar element (2a) being an interior side of a container (1), and destined to allow the coupling of said first laminar element (2a) with at least a second laminar element (2b), said second laminar element (2b) being an exterior side of the container (1);
- a complementary fastening element (6) activable on the second laminar element (2b) in operative conditions and destined to engage at least partially with the main fastening element (5);
- a main active portion (5b) of the main fastening element (5), said main active portion (5b) presenting mechanical fastening means extending towards the exterior side of the container (1) in assembling conditions and destined to engage with the complementary fastening element (6); and
- a complementary active portion (6b) of the complementary fastening element (6), said complementary active portion (6b) presenting interconnection means extending towards the interior side of the container (1) in assembling conditions and destined to engage with the mechanical fastening means of the main active portion (5b);
**characterised in that** said mechanical fastening means comprise a thread (9), said interconnection means comprising a hollow prismatic body having in its interior a helical groove (10) substantially counter shaped relative to the thread (9).

2. Assembly device as in claim 1, **characterised in that** the main fastening element, also comprises a main abutment portion (5a) destined to be engaged adjacently to a first face of the first laminar element (2a) and the main active portion (5b) extending towards a second face of the first laminar element (2a), said second face being opposite to said first face.

3. Assembly device as in claims 1 or 2, **characterised in that** said main active portion (5b) is substantially shaped according to a prismatic body having an axis of development substantially transverse, preferably perpendicular, to the plane of lay of the first laminar element (2a), said prismatic body comprising at least a locking body (7) obtained laterally on said prismatic body and destined to be irremovably engaged with the first laminar element (2a) in operative conditions.

4. Assembly device as in claim 3, **characterised in that** said locking body (7) has an insertion surface (7a) oriented according to a predetermined insertion angle (8) relative to the longitudinal axis of development of the prismatic body and an abutment surface (7b) connected to said first insertion surface (7a) and oriented substantially along a direction perpendicular to the longitudinal axis of development of the prismatic body.

5. Assembly device as in claims 3 or 4, **characterised in that** the main active portion (5b) comprises a predetermined number of locking bodies (7), radially set at equal distances on the prismatic body and placed at a predetermined distance from said abutment portion (5a).

6. Assembly device as in claim 5, **characterised in that** said mechanical fastening means comprise a thread (9) extending laterally from the prismatic body.

7. Assembly device as in any of the previous claims, **characterised in that** the complementary fastening element (6) comprises a complementary abutment portion (6a) destined to engage adjacently with a first surface of the second laminar element (2b) and the complementary active portion (6b) extending towards a second surface of the second laminar element (2b), said second surface of the second laminar element (2b) being opposite to said first surface of the second laminar element (2b), the second surface of the second laminar element (2b) and the second face of the first laminar element (2a) being in mutual contact in operative conditions.

8. Assembly device as in any of the previous claims, **characterised in that** it further comprises guide means (11) connected to the main fastening element (5) and operatively active thereon to determine an approach of the first laminar element (2a) to the second laminar element (2b).

9. Assembly device as in claim 8, **characterised in that** said guide means (11) comprise a traction body (11a) connected to the main active portion (5b) and destined to be actuated by an operator to approach the first laminar element (2a) to the second laminar element (2b).

10. Assembly device as in claim 9, **characterised in that** said traction body (11a) is a thread like element having a first end connected to the main abutment portion (5a) and a second end opposite to said first end and presenting an actuation interface (12) destined to be handled by the operator in operative conditions.

11. Assembly device as in claim 9, **characterised in that** the traction body (11a) is a rigid element (12) having a first end hinged to the complementary abutment portion (6a) according to a hinge axis that is substantially parallel to the plane of lay of the second laminar element (2b) and a second end opposite to the first end and having a contoured grip (13) destined to be gripped by the user's hand.

12. Assembly device as in any of the previous claims, **characterised in that** it comprises a predetermined number of coupled assembly devices (14), each of which has:
- at least two main fastening elements (5) connected to a first laminar element (2a) and mutually distanced by a predetermined spacing and destined to receive in coupling fashion at least a second laminar element (2b).
- at least two complementary fastening elements (6) respectively engaging the main fastening elements (5); and
- at least two rigid elements (12) having first ends hinged respectively to the complementary fastening elements (6) and second ends mutually connected by a grip (13), said grip (13) extending between the rigid elements (12) for a length substantially corresponding to said spacing.

13. Funerary container made of paper material, comprising:
a predetermined number of laminar elements (2) flexibly connected to each other and defining, in mutual co-operation, a housing box body (3) destined to contain a body and having at least a bottom wall, a plurality of lateral walls and at least a closure portion; and
a predetermined number of assembly devices (4), whereof each is operatively active on at least two laminar elements (2) to keep them in a mutually approached position in operative conditions;
**characterised in that** it further comprises.at least one of the assembly devices (4) according to anyone of the preceding claims from 1 to 13.

14. Container as in claim 13, **characterised in that** said predetermined number of laminar elements (2) comprises:
- a first head face (15) having two primary folding sides (15a) and two shared sides (15b) positioned transversely relative to said free sides (15a);
- a first and a second lateral faces (16, 17) connected to said first head face (15) through each of said shared sides (15b), said first and said second lateral faces having each an upper long side (16a, 17a), a lower long side (16b, 17b) and a short side (16c, 17c) opposite to one of said shared sides (15b);
- a second head face (18) substantially identical to the first head face (15) and connected to the first lateral face (16) or to the second lateral face (17) through said short side (16c) o (17c), said second head face (18) presenting two secondary folding sides (18a) positioned transversely relative to the short side (16c) o (17c);
- a first upper closure face (19) connected to the first lateral face (16) through said upper long side (16a);
- a first lower closure face (20) connected to the first lateral face (16) through said lower long side (16b);
- a second upper closure face (21) connected to the second lateral face (17) through said upper long side (17a); and
- a second lower closure face (22) connected to the second lateral face (17) through said lower long side (17b).

15. Container as in claims 13 or 14, **characterised in that** it further comprises:
- a first upper stiffening face (25) and a first lower stiffening face (26) connected to the first head face (15) respectively through one of the primary folding sides (15a); e
- a second upper.stiffening face (27) and a second lower stiffening face (28) connected to the second head face (18) respectively through one of the secondary folding sides (18a).

16. Container as in any of the previous claims from 13 to 15, **characterised in that** a predetermined number of laminar elements (2) further comprises a predetermined number of housing seats (23) each destined to receive an assembly device (4).

17. Container as in claim 16, **characterised in that** said housing seats (23) are obtained at least on the first lower closure face (20) and on the second lower closure face (22) in substantially corresponding positions in operative conditions, the housing seats (23) being preferably obtained also on the first upper closure face (19) and on the second upper closure face (21) in substantially corresponding positions in operative conditions.

18. Container as in claim 17, **characterised in that** the housing seats (23) are obtained at least on said first lower stiffening face (26) and on said second lower stiffening face (28), the housing seats (23) being preferably obtained also on said first upper stiffening face (25) and on said second lower stiffening face (28) in substantially corresponding positions in operative conditions, still more preferably in positions corresponding to the housing seats (23) obtained on the first lower closure face (20) and/or on the second lower closure face (22) and/or on the first upper closure face (19) and/or on the second upper closure face (21).

19. Container as in any of the previous claims from 13 to 18, **characterised in that** it further comprises a predetermined number of securing seats (24), preferably obtained in the first head face (15) and/or in the first lateral face (16) and/or in the second lateral face (17) and/or in the second head face (18) to house said predetermined number of coupled assembly devices (14).

## Patentansprüche

1. Montagevorrichtung, insbesondere für Särge aus Papiermaterial, umfassend:
- ein Hauptklemmelement (5),das mit einem ersten Folienelement (2a) unverstellbar verbindbar ist, wobei das erste Folienelement (2a) eine Innenseite eines Behälters (1) und dazu bestimmt ist, die Kopplung des ersten Folienelementes (2a) mit mindestens einem zweiten Folienelement (2b) zu erlauben, wobei das zweite Folienelement (2b) die Außenseite des Behälters (1) ist;
- ein Zusatzklemmelement (6), das am zweiten Folienelement (2b) in Arbeitsstellungen aktivierbar und dazu bestimmt ist, mindestens teilweise mit dem Hauptklemmelement (5) in Eingriff zu kommen;
- einen aktiven Hauptabschnitt (5b) des Hauptklemmelementes (5), wobei der aktive Hauptabschnitt (5b) mechanische Feststellmittel aufweist, die sich zur Außenseite des Behälters (1) in Montagestellungen sich erstrecken und dazu bestimmt sind, mit dem Zusatzklemmelement (6) in Eingriff zu kommen; und
- einen aktiven Zusatzabschnitt (6b) des Zusatzklemmelementes (6), wobei der aktive Zusatzabschnitt (6b) Verbindungsmittel aufweist, die sich zur Innenseite des Behälters (1) in Montagestellungen erstrecken und dazu bestimmt sind, mit den mechanischen Feststellmitteln des aktiven Hauptabschnittes (5b) in Eingriff zu kommen;
**dadurch gekennzeichnet, dass** die mechanischen Feststellmittel ein Gewinde (9) aufweisen, wobei die Verbindungsmittel einen prismatischen Hohlkörper umfassen, der in seinem Inneren eine schraubenförmige, im wesentlichen zum Gewinde (9) gegenprofilierte Nut (10) besitzt.

2. Montagevorrichtung nach Anspruch 1, **dadurch gekennzeichnet, dass** das Hauptklemmelement auch einen Hauptanschlagabschnitt (5a) umfasst, der dazu bestimmt ist, anliegend zu einer ersten Stirnfläche des ersten Folienelementes (2a) in Eingriff zu kommen und den aktiven Hauptabschnitt (5b), der sich zu einer zweiten Stirnfläche des ersten Folienelementes (2a) erstreckt, wobei die zweite Stirnfläche von der ersten Stirnfläche abgewandt ist.

3. Montagevorrichtung nach Anspruch 1 oder 2, **dadurch gekennzeichnet, dass** der aktive Hauptabschnitt (5b) im wesentlichen gemäß einem prismatischen Körper profiliert ist, der eine im wesentlichen querliegende Abwicklungsachse aufweist, die bevorzugter Weise zur Ebene senkrecht ist, in der das erste Folienelement (2a) liegt, wobei der prismatische Körper mindestens einen Spannkörper (7) umfasst, der seitlich am prismatischen Körper erhalten wird und dazu bestimmt ist, unverstellbar mit dem ersten Folienelement (2a) unter Arbeitsbedingungen in Eingriff zu kommen.

4. Montagevorrichtung nach Anspruch 3, **dadurch gekennzeichnet, dass** der Spannkörper (7) eine Einführfläche (7a), die gemäß einem bestimmten Einführwinkel (8) gegenüber der Längsabwicklungsachse des prismatischen Körpers ausgerichtet ist, und eine Anschlagfläche (7b) besitzt, die mit der Einführfläche (7a) verbunden und im wesentlichen gemäß einer Richtung ausgerichtet ist, die zur Längsabwicklungsachse des prismatischen Körpers senkrecht ist.

5. Montagevorrichtung nach Anspruch 3 oder 4, **dadurch gekennzeichnet, dass** der aktive Hauptabschnitt (5b) eine vorgegebene Anzahl von Spannkörpern (7) umfasst, die radial mit gleichen Abständen am prismatischen Körper und mit einem vorgegebenen Abstand vom Anschlagabschnitt (5a) angeordnet sind.

6. Montagevorrichtung nach Anspruch 3, **dadurch gekennzeichnet, dass** die mechanischen Feststellmittel ein Gewinde (9) umfassen, das sich seitlich vom prismatischen Körper erstreckt.

7. Montagevorrichtung nach einem beliebigen der vorstehenden Ansprüche, **dadurch gekennzeichnet, dass** das Zusatzklemmelement ein Zusatzanschlagabschnitt (6a) umfasst, das dazu bestimmt ist, anliegend zu einer ersten Fläche des zweiten Folienelementes (2b) in Eingriff zu kommen und den aktiven Zusatzabschnitt (6b), der sich zu einer zweiten Fläche des zweiten Folienelementes (2b) erstreckt, wobei die zweite Fläche des zweiten Folienelementes (2b) von der ersten Fläche des zweiten Folienelementes (2b) abgewandt ist, wobei die zweite Fläche des zweiten Folienelementes (2b) und die zweite Stirnfläche des ersten Folienelementes (2a) unter Arbeitsbedingungen gegeneinander in Berührung stehen.

8. Montagevorrichtung nach einem beliebigen der vorstehenden Ansprüche, **dadurch gekennzeichnet, dass** sie überdies Einlademittel (11) umfasst, die mit dem Hauptklemmelement (5) verbunden sind und auf dieses einwirken, um eine Annäherung des ersten Folienelementes (2a) an das zweite Folienelement (2b) zu bewirken.

9. Montagevorrichtung nach Anspruch 8, **dadurch gekennzeichnet, dass** die Einlademittel (11) einen Zugkörper (11a) umfassen, der mit dem aktiven Hauptabschnitt (5b) verbunden und dazu bestimmt ist, durch einen Benutzer betätigt zu werden, um das erste Folienelement (2a) dem zweiten Folienelement (2b) anzunähern.

10. Montagevorrichtung nach Anspruch 9, **dadurch gekennzeichnet, dass** der Zugkörper (11a) ein fadenförmiges Element ist, das sein erstes Ende, das mit dem Hauptanschlagabschnitt (5a) verbunden ist, und ein zweites Ende umfasst, das vom ersten Ende abgewandt ist und eine wirksame Zwischenfläche (12) aufweist, die dazu bestimmt ist, durch den Benutzer unter Arbeitsbedingungen gehandhabt zu werden.

11. Montagevorrichtung nach Anspruch 9, **dadurch gekennzeichnet, dass** der Zugkörper (11a) ein starres Element (12) ist, das ein erstes Ende, das am Zusatzanschlagabschnitt (6a) gemäß einer Anlenkachse angelenkt ist, die im wesentlichen zur Ebene parallel ist, in der das zweite Folienelement (2b) liegt, und ein zweites Ende besitzt, das vom ersten Ende abgewandt ist und einen profilierten Griff (13) besitzt, der dazu bestimmt ist, von der Hand des Benutzers ergriffen zu werden.

12. Montagevorrichtung nach einem beliebigen der vorstehenden Ansprüche, **dadurch gekennzeichnet, dass** sie eine vorgegebene Anzahl von gekoppelten Montagevorrichtungen (14) umfasst, von denen jede besitzt:
- mindestens zwei Haupt klemmelemente (5), die mit einem ersten Folienelement (2a) verbunden und voneinander durch eine vorgegebene Lücke beabstandet und dazu bestimmt sind, mindestens ein zweites Folienelement (6b) gekoppelt aufzunehmen;
- mindestens zwei Zusatzklemmelemente (6), die jeweils die Hauptklemmelemente (5) ergreifen; und
- mindestens zwei starre Elemente (12), die erste Enden, die jeweils an den Zusatzklemmelementen (6) angelenkt sind, und zweite Enden besitzen, die miteinander durch einen Griff (13) verbunden sind, wobei der Griff (13) sich zwischen den starren Elementen (12) für einen Abschnitt erstrecken, der im wesentlichen der Lücke entspricht.

13. Sarg aus Papiermaterial, umfassend:
- eine vorgegebene Anzahl von Folienelementen (2), die miteinander biegsam verbunden sind und in Zusammenwirkung ein Aufnahmegehäuse (3) festlegen, das dazu bestimmt ist, einen Körper zu beinhalten, und mindestens eine Bodenwand, eine Vielzahl von Seitenwänden und mindestens einen Schließteil aufweist; und
- eine vorgegebene Anzahl von Montagevorrichtungen (4), von denen jede auf mindestens zwei Folienelemente (2) wirkt, um sie in einer gegenseitigen Annäherungsposition unter Arbeitsbedingungen zu halten;
**dadurch gekennzeichnet, dass** er überdies mindestens eine der Montagevorrichtung (4) gemäß einer beliebigen der vorstehenden Ansprüche von 1 bis 13 umfasst.

14. Sarg nach Anspruch 13, **dadurch gekennzeichnet, dass** die vorgegebene Anzahl von Folienelementen (2) umfasst:
- eine erste kopfseitige Stirnfläche (15), die zwei primäre Faltseiten (15a) und zwei gemeinsame Seiten (15b) aufweisen, die gegenüber den freien Seiten (15a) querliegend angeordnet sind;
- eine erste und eine zweite seitliche Stirnfläche (16, 17), die mit der ersten Kopfstirnfläche (15) über jede der gemeinsamen Seiten (15b) verbunden sind, wobei die erste und die zweite seitliche Stirnfläche jeweils eine obere lange Seite (16a, 17a), eine lange untere Seite (16b, 17b) und eine kurze Seite (16c, 17c) umfasst, die von einem der gemeinsamen Seiten (15b) abgewandt sind;
- eine zweite Kopfstirnfläche (18), die im wesentlichen zur ersten Kopfstirnfläche (15) identisch und mit der ersten, seitlichen Stirnfläche (16) oder mit der zweiten seitlichen Stirnfläche (17) über die kurze Seite (16c) oder (17c) verbunden ist, wobei die zweite Kopfstirnfläche (18) zwei sekundäre Faltseiten (18a) aufweist, die gegenüber der kurzen Seite (16c) oder (17c) querliegend angeordnet sind;
- eine erste, obere Schließstirnfläche (19), die mit der ersten, seitlichen Stirnfläche (16) über die obere, lange Seite (16a) verbunden ist;
- eine erste, untere Schließstirnfläche (20), die mit der ersten seitlichen Stirnfläche (16) über die untere, lange Seite (16b) verbunden ist;
- eine zweite, obere Schließstirnfläche (21), die mit der zweiten seitlichen Stirnfläche (17) über die obere, lange Seite (17a) verbunden ist; und
- eine zweite, untere Schließstirnfläche (22), die mit der zweiten seitlichen Stirnfläche (17) über die untere, lange Seite (17b) verbunden ist.

15. Sarg nach Anspruch 13 oder 14, **dadurch gekennzeichnet, dass** er überdies umfasst:
- eine erste, obere Versteifungsstirnfläche (25) und eine erste, untere Versteifungsstirnfläche (26), die mit der ersten Kopfstirnfläche (15) jeweils über eine der primären Faltseiten (15a) verbunden sind; und
- eine zweite, obere Versteifungsstirnfläche (27) und eine zweite, unter Versteifungsstirnfläche (28), die mit der zweiten Kopfstirnfläche (18) jeweils über eine der sekundären Faltseiten (18a) verbunden sind.

16. Sarg nach einem beliebigen der vorstehenden Ansprüche von 13 bis 15, **dadurch gekennzeichnet, dass** eine vorgegebene Anzahl von Folienelementen (2) überdies eine vorgegebene Anzahl von Aufnahmen (23) umfasst, von denen jede dazu bestimmt ist, eine Montagevorrichtung (4) aufzunehmen.

17. Sarg nach Anspruch 16, **dadurch gekennzeichnet, dass** die Aufnahmen (23) mindestens auf der ersten, unteren Schließstirnfläche (20) und auf der zweiten, unteren Schließstirnfläche (22) in Stellungen erhalten werden, die im wesentlichen den Arbeitsstellungen entsprechen, wobei die Aufnahmen (23) bevorzugter Weise auch auf der ersten, oberen Schließstirnfläche (19) und auf der zweiten, oberen Schließstirnfläche (21) in Stellungen erhalten werden, die im wesentlichen den Arbeitsstellungen entsprechen.

18. Sarg nach Anspruch 17, **dadurch gekennzeichnet, dass** die Aufnahmen (23) mindestens auf der ersten, unteren Versteifungsstirnfläche (26) und auf der zweiten, unteren Versteifungsstirnfläche (28) erhalten werden, wobei die Aufnahmen (23) bevorzugter Weise auch auf der ersten, oberen Versteifungsstirnfläche (25) und auf der zweiten, unteren Versteifungsstirnfläche (28) in Stellungen erhalten werden, die im wesentlichen in Arbeitstellungen entsprechen, noch bevorzugter in Stellungen, die den Aufnahmen (23) entsprechen, die auf der ersten, unteren Schließstirnfläche (20) und/oder auf der zweiten, unteren Schließstirnfläche (22) und/oder auf der ersten, oberen Schließstirnfläche (19) und/oder auf der zweiten, oberen Schließstirnfläche (21) erhalten werden.

19. Sarg nach einem beliebigen der vorstehenden Ansprüche von 13 bis 18, **dadurch gekennzeichnet, dass** er überdies eine vorgegebene Anzahl von Einhängsitzen (24) umfasst, die bevorzugter Weise in der ersten Kopfstirnfläche (15) und/oder in der ersten, seitlichen Stirnfläche (16) und/oder in der zweiten, seitlichen Stirnfläche (17) und/oder in der zweiten Kopfstirnfläche (18) erhalten werden, um die vorgegebene Anzahl von gekoppelten Montagevorrichtungen (14) aufzunehmen.

## Revendications

1. Dispositif d'assemblage, notamment pour cercueils de papier, comprenant:
- un élément de serrage principal (5) à relier de manière inamovible à un premier élément laminaire (2a), ledit premier élément laminaire (2a) étant un côté intérieur d'un cercueil (1), et destiné à permettre l'accouplement dudit premier élément laminaire (2a) à au moins un deuxième élément laminaire (2b), ledit deuxième élément laminaire (2b) étant un côté extérieur du cercueil (1);
- un élément de serrage complémentaire (6) à activer sur le deuxième élément laminaire (2b) en conditions opérantes et destiné à s'engager au moins partiellement à l'élément de serrage principal (5);
- une portion active principale (5b) de l'élément de serrage principal (5), ladite portion active principale (5b) présentant des moyens de fixation mécanique s'étendant vers le côté extérieur du cercueil (1) en conditions assemblées et destinés à s'engager à l'élément de serrage complémentaire (6); et
- une portion active complémentaire (6b) de l'élément de serrage complémentaire (6), ladite portion active complémentaire (6b) présentant des moyens de liaison réciproque s'étendant vers le côté intérieur du cercueil (1) en conditions assemblées et destinés à s'engager aux moyens de fixation mécanique de la portion active principale (5b);
**caractérisé en ce que** lesdits moyens de fixation mécanique comportent un filetage (9), lesdits moyens de liaison réciproque comprenant un corps prismatique creux ayant à son intérieur une rainure hélicoïdale (10) épousant sensiblement la forme du filetage (9).

2. Dispositif d'assemblage selon la revendication 1 **caractérisé en ce que** l'élément de serrage principal comporte en outre une portion de butée principale (5a) destinée à être engagée en position proche d'une première face du premier élément laminaire (2a) et la portion active principale (5b) s'étendant vers une deuxième face du premier élément laminaire (2a), ladite deuxième face étant opposée à ladite première face.

3. Dispositif d'assemblage selon les revendications 1 ou 2, **caractérisé en ce que** ladite portion active principale (5b) est essentiellement conformée selon un corps prismatique ayant un axe d'extension essentiellement transversale, de préférence perpendiculaire, au plan de disposition du premier élément laminaire (2a), ledit corps prismatique comprenant au moins un corps de blocage (7) obtenu latéralement sur ledit corps prismatique et destiné à être engagé de manière inamovible au premier élément laminaire (2a) en conditions opérantes.

4. Dispositif d'assemblage selon la revendication 3, **caractérisé en ce que** ledit corps de blocage (7) a une surface d'insertion (7a) orientée selon un angle d'insertion prédéterminé (8) par rapport à l'axe longitudinal d'extension du corps prismatique et une surface de butée (7b) reliée à ladite première surface d'insertion (7a) et orientée sensiblement le long d'une direction perpendiculaire à l'axe longitudinal d'extension du corps prismatique.

5. Dispositif d'assemblage selon les revendications 3 ou 4, **caractérisé en ce que** la portion active principale (5b) comporte un nombre prédéterminé de corps de blocage (7), disposés espacés de la même distance en sens radial sur le corps prismatique et placés à une distance prédéterminée de ladite portion de butée (5a).

6. Dispositif d'assemblage selon la revendication 5, **caractérisé en ce que** lesdits moyens de fixation mécanique comportent un filetage (9) s'étendant latéralement à partir du corps prismatique.

7. Dispositif d'assemblage selon l'une quelconque des revendications précédentes, **caractérisé en ce que** l'élément de serrage complémentaire (6) comporte une portion de butée complémentaire (6a) destinée à s'engager en position proche d'une première surface du deuxième élément laminaire (2b), et la portion active complémentaire (6b) s'étendant vers une deuxième face du deuxième élément laminaire (2b), ladite deuxième surface du deuxième élément laminaire (2b) étant opposée à ladite première surface du deuxième élément laminaire (2b), la deuxième surface du deuxième élément laminaire (2b) et la deuxième face du premier élément laminaire (2a) étant en contact réciproque en conditions opérantes.

8. Dispositif d'assemblage selon l'une quelconque des revendications précédentes, **caractérisé en ce qu'**il comporte en outre des moyens de guidage (11) reliés à l'élément de serrage principal (5) et actifs sur ce dernier de manière opérante pour déterminer le rapprochement entre le premier élément laminaire (2a) et le deuxième élément laminaire (2b).

9. Dispositif d'assemblage selon la revendication 8, **caractérisé en ce que** lesdits moyens de guidage (11) comportent un corps de traction (11a) relié à la portion active principale (5b) et destiné à être entraîné par un opérateur pour le rapprochement entre le premier élément laminaire (2a) et le deuxième élément laminaire (2b).

10. Dispositif d'assemblage selon la revendication 9, **caractérisé en ce que** ledit corps de traction (11a) est un élément filiforme ayant une première extrémité reliée à la portion de butée principale (5a) et une deuxième extrémité opposée à ladite première extrémité et présentant une interface d'actionnement (12) destinée à être maniée par l'opérateur en conditions opérantes.

11. Dispositif d'assemblage selon la revendication 9, **caractérisé en ce que** le corps de traction (11a) est un élément rigide (12) ayant une première extrémité articulée sur la portion de butée complémentaire (6a) selon un axe d'articulation qui est essentiellement parallèle au plan de disposition du deuxième élément laminaire (2b), et une deuxième extrémité opposée à la première extrémité et ayant une prise de forme convenable (13) destinée à être saisie par la main de l'utilisateur.

12. Dispositif d'assemblage selon l'une quelconque des revendications précédentes, **caractérisé en ce qu'**il comporte un nombre prédéterminé de dispositifs d'assemblage accouplés (14), chacun desquels a:
- au moins deux éléments de serrage principaux (5) reliés à un premier élément laminaire (2a) et espacés réciproquement selon une distance prédéterminée et destinés à recevoir par accouplement au moins un deuxième élément laminaire (2b);
- au moins deux éléments de serrage complémentaires (6) engageant respectivement les éléments de serrage principaux (5); et
- au moins deux éléments rigides (12) ayant leurs premières extrémités articulées respectivement sur les éléments de serrage complémentaires (6) et leurs deuxièmes extrémités reliées réciproquement par une prise (13), ladite prise (13) s'étendant entre les éléments rigides (12) sur une longueur correspondant essentiellement à ladite distance.

13. Cercueil de papier, comprenant:
- un nombre prédéterminé d'éléments laminaires (2) reliés réciproquement de manière flexible et définissant, en coopération réciproque, un corps de logement en forme de boîte (3) destiné à contenir un corps et ayant au moins une paroi inférieure, une pluralité de parois latérales et au moins une portion de fermeture; et
- un nombre prédéterminé de dispositifs d'assemblage (4), dont chacun est actif de manière opérante sur au moins deux éléments laminaires (2) pour les maintenir en position de rapprochement réciproque en conditions opérantes;
**caractérisé en ce qu'**il comporte en outre au moins un des dispositifs d'assemblage (4) suivant l'une quelconque des revendications précédentes 1 à 13.

14. Cercueil selon la revendication 13, **caractérisé en ce que** ledit nombre prédéterminé d'éléments laminaires (2) comporte:
- une première face de tête (15) ayant deux côtés de pliage primaires (15a) et deux côtés (15b) partagés positionnés transversaux par rapport auxdits côtés libres (15a);
- une première et une deuxième faces latérales (16, 17) reliées à ladite première face de tête (15) à travers chacun desdits côtés partagés (15b), lesdites première et deuxième faces latérales ayant chacune un côté long supérieur (16a, 17a) et un côté long inférieur (16b, 17b) et un côté court (16c, 17c) opposé à un desdits côtés partagés (15b);
- une deuxième face de tête (18) sensiblement identique à la première face de tête (15) et reliée à la première face latérale (16) ou à la deuxième face latérale (17) à travers ledit côté court (16c) ou (17c), ladite deuxième face de tête (18) présentant deux côtés de pliage secondaires (18a) positionnés transversaux par rapport au côté court (16c) ou (17c);
- une première face de fermeture supérieure (19) reliée à la première face latérale (16) à travers ledit côté long supérieur (16c);
- une première face de fermeture inférieure (20) reliée à la première face latérale (16) à travers ledit côté court inférieur (16b);
- une deuxième face de fermeture supérieure (21) reliée à la deuxième face latérale (17) à travers ledit côté long supérieur (17a); et
- une deuxième face de fermeture inférieure (22) reliée à la deuxième face latérale (17) à travers ledit côté long inférieur (17b).

15. Cercueil selon les revendications 13 ou 14, **caractérisé en ce qu'**il comporte en outre:
une première face de raidissement supérieure (25) et une première face de raidissement inférieure (26) reliées à la première face de tête (15) respectivement à travers un des côtés de pliage primaires (15a); et
- une deuxième face de raidissement supérieure (27) et une deuxième face de raidissement inférieure (28) reliées à la deuxième face de tête (18) respectivement à travers un desdits côtés de pliage secondaires (18a).

16. Cercueil selon l'une quelconque des revendications précédentes 13 à 15, **caractérisé en ce qu'**un nombre prédéterminé d'éléments laminaires (2) comporte en outre un nombre prédéterminé de sièges de logement (23) destinés chacun à recevoir un dispositif d'assemblage (4).

17. Cercueil selon la revendication 16, **caractérisé en ce que** lesdits sièges de logement (23) sont obtenus au moins sur la première face de fermeture inférieure (20) et sur la deuxième face de fermeture inférieure (22) en positions sensiblement correspondantes en conditions opérantes, les sièges de logement (23) étant de préférence obtenus également sur la première face de fermeture supérieure (19) et sur la deuxième face de fermeture supérieure (21) en positions sensiblement correspondantes en conditions opérantes.

18. Cercueil selon la revendication 17, **caractérisé en ce que** les sièges de logement (23) sont obtenus au moins sur ladite première face de raidissement inférieure (26) et sur ladite deuxième face de raidissement inférieure (28), les sièges de logement (23) étant de préférence obtenus également sur ladite première face de raidissement supérieure (25) et sur ladite deuxième face de raidissement inférieure (28) à des positions sensiblement correspondantes en conditions opérantes, encore mieux à des positions correspondant aux sièges de logement (23) obtenus sur la première face de fermeture inférieure (20) et/ou sur la deuxième face de fermeture inférieure (22) et/ou sur la première face de fermeture supérieure (19) et/ou sur la deuxième face de fermeture supérieure (21).

19. Cercueil selon l'une quelconque des revendications précédentes 13 à 18, **caractérisé en ce qu'**il comporte en outre un nombre prédéterminé de sièges d'accrochage (24), de préférence obtenus dans la première face de tête (15) et/ou dans la première face latérale (16) et/ou dans la deuxième face latérale (17) et/ou dans la deuxième face de tête (18) pour loger ledit nombre prédéterminé de dispositifs d'assemblage accouplés (14).
